# EUROPEAN PATENT SPECIFICATION

(11) **EP 1 365 275 B1**
(45) Date of publication and mention of the grant of the patent: **28.12.2005**
(21) Application number: 03252841.6
(22) Date of filing: 07.05.2003
(51) Int. Cl.: G02F 1/00, H01S 3/115

(54) **Electro-optic Q-switch with Langasite-type single crystal**
Elektrooptischer Güteschalter mit Einkristall vom Typ Langasit
Dispositif de déclenchement (Q-switch) comprenant un monocristal de type langasite

(30) Priority: 20.05.2002 CN 02110374
(43) Date of publication of application: 26.11.2003
(73) Proprietor: Shandong University, Jinan City, Shandong Province 250100 (CN)
(72) Inventor: Wang, Jiyang, c/o State Key Laboratory of, Jinan City, Shandong Province 250100 PR (CN); Yin, Xin, c/o State Key Laboratory of, Jinan City, Shandong Province 250100 PR (CN); Zhang, Shaojun, c/o State Key Laboratory of, Jinan City, Shandong Province 250100 PR (CN); Hu, Xiaobo, c/o State Key Laboratory of, Jinan City, Shandong Province 250100 PR (CN); Zhang, Huaijin, c/o State Key Laboratory of, Jinan City, Shandong Province 250100 PR (CN); Jiang, Minhua, c/o State Key Laboratory of, Jinan City, Shandong Province 250100 PR (CN)
(74) Representative: Musker, David Charles

(56) References cited:
- US-A- 5 272 713
- YIN XIN; WANG JIYANG; ZAHNG HUAIJIN; ZHANG SHAOJUN; HAN RONGJIANG; CHANG TINGXIOU: "Electrooptic Properties and Electrooptic Q Switch of La3Ga5SiO14 Single Crystal" JPN. J. APPL. PHYS., vol. 41, no. 12, December 2002 (2002-12), pages 7419-7421, XP002250564
- DATABASE WPI Section EI, Week 200339 Derwent Publications Ltd., London, GB; Class V08, AN 2003-404470 XP002256744 & CN 1 402 391 A (UNIV SHANDONG), 12 March 2003 (2003-03-12)
- STADE J; BOHATY L; HENGST M; HEIMANN R B: "Electro-optic, piezoelectric and dieelectric properties of langasite (La3Ga5SiO14), langanite (La3Ga5.5Nb0.5O14) and langataite (La3Ga5.5Ta0.5O0.5O14)" CRYSTAL RESEARCH TECHNOLOGY, vol. 37, no. 10, October 2002 (2002-10), pages 1113-1120, XP009015361
- EICHLER H J; EICHLER J: "Laser: Bauformen, Strahlführung, Anwendungen - 4.Auflage" June 2002 (2002-06) , SPRINGER-VERLAG BERLIN HEIDELBERG NEW YORK; XP002250566 * page 283 - page 286 *
- FUKUDA T; SHIMAMURA K; KOCHURIKHIN V V; CHANI V I; EPELBAUM B M; BALDOCHI S L; TAKEDA H; YOSHIKAWA A: "Crystal groth of oxide and fluoride materials for optical, piezoelectric and other applications" JOURNAL OF MATERIAL SCIENCE: MATERIALS IN ELECTRONICS (USA), vol. 10, no. 8, September 1999 (1999-09), pages 571-580, XP009015296
- BOHM J ET AL: "Czochralski growth and characterization of piezoelectric single crystals with langasite structure: La3Ga5SiO14 (LGS), La3Ga5.5Nb0.5O14 (LGN), and La3Ga5.5Ta0.5O14 (LGT) - Part I" JOURNAL OF CRYSTAL GROWTH, NORTH-HOLLAND PUBLISHING CO. AMSTERDAM, NL, vol. 204, no. 1-2, 1 July 1999 (1999-07-01), pages 128-136, XP004179725 ISSN: 0022-0248

## Description

**Technology field attribution:** This invention involves the application of crystal materials in the field of electrooptic technology. Actually, it will introduce a new electrooptic Q-switch made of a langasite single crystal.

**Technology background:** Electrooptic Q-switch is an important optical element in laser technology. As long as a crystal can be used for electrooptic element, it must have the following physical properties: 1). Large electrooptic coefficient and low half-wave voltage; 2). High damage threshold; 3). Suitable transmission wavelength range; 4). High electrical resistance; 5). Low dielectric constant; 6). Stable physical and chemical properties. Up to date, only two kinds of electrooptic Q-switches are available in commercial market. They are made of DKDP and LiNbO₃ crystals respectively. The former have high damage threshold and good optical homogeneity. When its longitudinal electrooptic effect is utilized in an electrooptic Q-switch, a circular electrical pole must be coated on the crystal. It becomes difficult to fabricate the electrooptic Q-switch. Another disadvantage of using a DKDP electrooptic Q-switch is its high and un-adjustable half-wave voltage which changes greatly with temperature. Furthermore, DKDP crystal is deliquescent, and so moisture protection must be considered. Thus the element fabrication process is very complicated. An advantage of using LiNbO₃ as an electrooptic Q-switch is that its half-wave voltage is adjustable with the ratio of longitudinal to transversal length of crystal. Also, the transversal electrooptic effect is utilized when the crystal is used in an electrooptic Q-switch. It is very convenient to fabricate the electrooptic Q-switch using a LiNbO₃ crystal. The disadvantages of using LiNbO₃ in an electrooptic Q-switch include: low threshold, low optical homogeneity, large half-wave voltage variation with temperature at low temperature condition. Therefore, the above mentioned two kinds of crystal Q-switch elements can only meet the requirement of application to some extent. It is necessary to exploit new electrooptic crystals and Q-switch elements.

Langasite (La₃Ga₅SiO₁₄, abbreviated as LGS) is a piezoelectric crystal with good physical properties. In 1982, the laser expert A.A.Kaminsky reported the laser property of Nd:LGS crystal (A.A.Kaminsky, S.E.Sarkisov, Reports of the USSR Academy of Science, 1982, 264(1):93) for the first time. Later, growth and laser properties of Nd:LGS, Nd:Ca₃Ga₂Ge₄O₁₄ and Sr₃Ga₂Ge₄O₁₄ (A.A.Kaminsky, B.V.Mill, G.G.Khodzhabagyan, Phys.Stat.Sol.(a), 1983,80:387; A.A.Kaminsky, I.M.Silvestroval, S.E.Sarkisov, Phys.Stat.Sol.(a),1983,80:607; A.A.Kaminsky, E.L.Belokoneva, B.V.Mill, Phys.Stat.Sol.(a),1984,86:345) were reported. In 1984, A.I.Andreev discovered for the first time (A.I.Andreev, M.F.Doubvik, Letters to J. Theory Physics, 1984,10(8):487) that the elastic vibration for LGS single crystal possessed zero temperature coefficient cut-type. In 1986, SAW single chip filter and resonance device with high stability were fabricated by E.G.Bronnikova et al. (E.G.Gronnikova, I.M.Larionov, Electronic Engineering Series, "Radiodetails and Compounds",1986,2:63.). The patent for single chip LGS crystal filter was applied by S.A.Sarkissov et al. (Patent see patent application publication SU1780147) and it symbolized that application aspect is exploited. Later, scientists from America, Germany, Japan and Korea paid attention to this work and extensive studies on the LGS family crystals were performed. At present, in addition to scientists from Russia, scientists from Japan joined in this research and some companies tried to exploit the related device. Scientists from China also paid attention to the research and application of the crystal. (Hu Shaoqin, Piezoelectricity and acoustic-optics, 1999,21(4):299). Up to now, the application of LGS and its family crystals in electrooptic device is still not reported in the world.

Electrooptic property results in the change of refractive index affected by electric field. Electrooptic Q-switch and electrooptic modulator can be fabricated by utilizing the electrooptic effect. LGS family crystals (32 point group symmetry) possess both electrooptic effect and optical activity. Optical activity means that the polarization plane will rotate an angle proportional to the crystal thickness when a monochromic plane wave propagates through a crystal. The interaction between electrooptic effect and optical activity was studied. It is thought that the fabrication of an electrooptic device using a crystal with optical active property is difficult due to the polarization plane rotation affected by optical activity. Therefore, no electrooptic devices fabricated using crystals with optical activity have been reported up to now.

A Q-switch comprised of a quarter wave plate, a pockels cell and a polarizer included in a resonant laser cavity is known from the US 52 72 713 patent specification.

### Detailed description

According to the present invention, there is provided a Q-switch element according to claim 1.

The result of the invention is to provide a new electrooptic Q-switch made of a single crystal with optical activity. It overcomes the disadvantages of commercial electrooptic Q-switches such as high, un-adjustable half-wave voltage, low stability with temperature, low optical damage threshold and deliquescence.

In an embodiment of the invention, a new electrooptic Q-switch includes a rectangular piece of langasite (La₃Ga₅SiO₁₄) crystal and a reflecting element located on one side of the LGS crystal along the light propagation direction. The linear polarized light passing through the LGS crystal can be reflected by the reflecting element, then returns the LGS crystal again, and the angle of the polarization plane rotation becomes zero.

In an embodiment of the invention, a wave plate of λ/4 is installed in between the LGS crystal and the reflecting element where λ is the wavelength of the propagation light in LGS.

In embodiments of the invention, the langasite crystal can be LGS, or Nd-doped LGS, or La₃Ga₅₋ₓAlₓSiO₁₄ (the value of x is 0-5), or Sr₃Ga₂Ge₄O₁₄, or Na₂CaGe₆O₁₄, or Ca₃Ga₂Ge₄O₁₄, or La₃Ga_{5.5}Nb_{0.5}O₁₄, or La₃Ga_{5.5}Ta_{0.5}O₁₄ crystal.

In an embodiment of the invention, two end faces of the LGS crystal perpendicular to the direction of the light must be polished and coated with anti-reflection films for 1.064 µm laser.

In particular, the length along the Z direction (the light propagation direction) of the LGS crystal ranges from 8mm to 1500mm, and the width (along X or Y direction) and thickness (along X or Y direction) perpendicular to the direction of the length ranges from 4mm to 20mm.

In addition, two end faces of the LGS crystal along the direction of the light propagation may be processed to be the Brewster's angle and polished. The Brewster's angle is 62°for the 1.064µm laser. And the length of Z direction of the LGS crystal ranges from 8mm to 1500mm, the width along the X direction ranges from 4mm to 15mm, and the thickness along the Y direction ranges from 4 to 15mm. The electric field is applied along the Y direction.

The reflecting element mentioned above can be an all-reflection plane mirror.

The electrooptic Q-switch designed in this invention is more suitable for the medium power laser widely used at present. The main advantage of the invention is that the optical activity of the LGS crystal is prevented from influencing the electrooptic property. Based on the efficient electrooptic coefficients and optic damage threshold of LGS crystal, a new electrooptic Q-switch, possessing the advantages of low, adjustable half-wave voltage, high stability with temperature, high optical damage threshold and non-deliquescent, has been designed and successfully fabricated by utilizing the transversal electrooptic effect of the crystal.

The LGS crystal belongs to the trigonal system, with point group 32, and possesses electrooptic effect and optical activity. The electrooptic coefficients of the LGS crystal are γ₁₁=γ₁₂=γ₆₂=2.3×10⁻¹²m/V, and the optic damage threshold is 9.5 times of that of the LiNbO₃ crystal. The results above show the LGS crystal can be used to fabricate the electrooptic Q-switch. The electrooptic Q-switch utilizes the transversal electrooptic effect of the crystal, and the half-voltage V_{π} can be adjusted by changing the aspect ratio $\frac{\text{l}}{\text{d}}$, according to the formula of 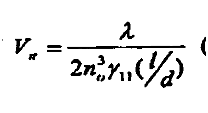 (λ is the wavelength of the laser, nₒ is the refractive index of the o light, l/d is the ratio of the length along the direction of the light propagation to the thickness along the direction of the electric field applied to the crystal, called aspect ratio.).

Besides the electrooptic effect, the LGS crystal also possesses optical activity, which makes it difficult to design the Q-switch. In this invention, the light propagates along the optic axis, and the plane polarized light goes forwards and backwards through the LGS crystal in the laser resonant cavity, so that the total angle of the polarization plane rotation is zero. The design avoids the influence of the optical activity on the polarized plane rotation of plane polarized light propagation in the crystal. The Q-switch works utilizing the orthogonal polarized light interference.

In addition, the hardness of the LGS crystal is 5.5 (Mohs hardness), no cleavage, without any phase transformation point between the room temperature and its melting point 1470°C. The crystal is non- deliquescent, so moisture protection is not required.

In an embodiment of the invention, a wave plate of $\frac{\text{λ}}{\text{4}}$ can be installed in between the LGS crystal and the reflecting element. If a plane polarized light passes through the LGS crystal, its polarized direction will rotate a angle of ϕ. Then it passes through the wave plate of $\frac{\text{λ}}{\text{4}}$, and is reflected back to the wave plate again by the reflecting element. It finally takes the same polarized direction as before it entered the wave plate of $\frac{\text{λ}}{\text{4}}$, and only the phase of the plane polarized light is changed for $\frac{\text{π}}{\text{2}}$. When the light goes back through the LGS crystal, the rotation direction for either left-rotating or right-rotating polarized light will be opposite to the rotating direction when it penetrated through the LGS crystal at first, because at present the LGS crystal Q-switch is closed and no electric field is applied. Eventually when the plane polarized light composed of the left-rotating and right-rotating polarized light is out of the LGS crystal, its polarized direction will be the same as that when it first entered the LGS crystal, only the phase of the plane polarized light is changed by $\frac{\text{π}}{\text{2}}$. This is equivalent to converting the parallel polarization light interference into the orthogonal polarization light interference. Compared with the parallel polarization light interference, the orthogonal polarized light interference can avoid the influence of electrooptic effect on optical activity, because electric field is not applied on the LGS crystal when the Q-switch is closed. The propagation light is still to be plane polarized after it goes forwards and backwards through the optical active crystal. Also, the property of the small birefringence of LGS crystal is utilized. The influences of the small mis-orientation and the optical inhomogeneity on the Q-switch are reduced to a small extent.

In this embodiment of the invention, because two end faces of the LGS Q-switch along the light propagation direction can be polished and coated with anti-reflection films for 1.064µm laser, the transmittance of the Q-switch at 1.064µm may be up to 99%.

Summarized in the description above, the electrooptic Q-switch made of the LGS crystal possesses many advantages, such as high optical damage threshold (9.5 times of that of LN crystal), low and adjustable half-wave voltage, non-deliquescence, small half-wave voltage variation with temperature. It is very suitable for use in the intermediate power laser.

### Figure captions:

Fig. 1. Principle of the electrooptic Q-switch in an embodiment of this invention.
Fig. 2. Schematic diagram of the structure of LGS electrooptic Q-switch in an embodiment of this invention.

### Application scheme

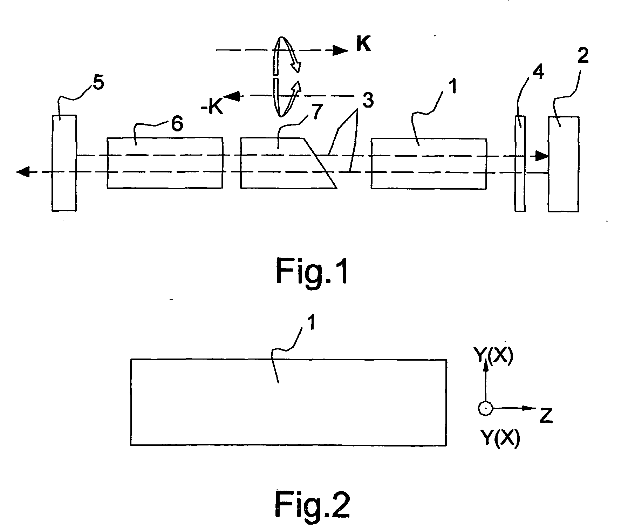

As shown in Fig.1 and Fig.2, the electrooptic Q-switch device was fabricated with LGS crystal 1 and reflecting element 2 placed at one side of LGS crystal 1 to reflect the laser beam back to LGS crystal 1. The plane polarized laser beam passes through the LGS crystal twice, forwards and backwards, so that the rotation angle of the polarization plane of the beam is zero. As mentioned above, when a plane polarized laser beam propagates through an optical active crystal, its polarization plane will rotate an angle of Φ around the wave vector **K**. The rotating direction is dependent on the wave vector **K**. When the beam is reflected back to propagate the same distance along the wave vector -**K**, the rotation angle will be -Φ. So Φ+(-Φ)=0. As a result, the optical activity effect of LGS crystal vanishes. So, the misunderstanding that the optical active crystal could not be used for the electrooptic Q-switch device is eliminated. In this invention, transversal electrooptic effect of LGS crystal 1 was used. The half-wave voltage can be adjusted by the ratio of longitudinal to transversal length of LGS crystal and the voltage changes slightly with the change of temperature. It is not necessary to consider moisture-protection. The laser damage threshold of LGS crystal is 9.5 times of that of LiNbO₃ (LN) crystal. The electrooptic Q-switch of LGS crystal has the common advantages of the switches of DKDP and LN crystals and it is particularly suitable for use in lasers of intermediate power.

In an embodiment of this invention, as shown in Fig.1, a 1/4 λ wave plate 4 is placed between LGS crystal 1 and reflecting element 2, where λ is the wavelength of laser beam. Fig. 1 is the schematic diagram of LGS Q-switch in a pulse laser. The laser beam with wavelength of 1.064 µm from Nd:YAG is linearly polarized by a polarizer 7. The polarization direction is the same as the X-axis of LGS. The polarization direction of the beam will rotate an angle of φ, if the beam passes through the LGS crystal. After the beam passes through the λ/4 wave plate 4, and is reflected by the reflecting element 2, and passes through the wave plate 4 again, the polarization direction does not change, but the phase of the beam changes by π/2. When no electric field is applied to the LGS crystal, i.e. the Q-switch is in the situation of shut off, the right-rotating polarization beam and the left-rotating polarization beam passing through the LGS crystal have the opposite rotating direction of polarization plane. After the beam passes through LGS twice, the polarization direction remains unchanged but the phase of the beam changes by π/2. The parallel polarization interference is changed into the vertical polarization interference by this way. Compared with the parallel polarization interference, the vertical polarization interference without electric field applied on the LGS crystal prevents optical activity and ensures that the polarization direction does not change after the beam passes through the LGS crystal twice. This utilizes fully the advantage of the small birefringence of optical active LGS crystal and reduces the influence of orientated error and optical inhomogeneity on the Q-switch. This also makes the Q-switch have lower dynamic extinction ratio than static-state extinction ratio.

As shown in Fig. 1, the mentioned reflecting element 2 is a plane full-reflection-mirror.

In this invention, the mentioned LGS crystal generally refers to La₃Ga₅SiO₁₄, Nd:La₃Ga₅SiO₁₄, La₃Ga₅₋ₓAlₓSiO₁₄(x=0~5), Sr₃Ga₂Ge₄O₁₄, Na₂GaGe₆O₁₄, Ca₃Ga₂Ge₄O₁₄, La₃Ga_{5.5}Nb_{0.s}O₁₄, La₃Ga_{5.5}Ta_{0.5}O₁₄ crystal, and other isomorphic heterogeneous crystals of LGS.

In order to increase the transmission of the mentioned LGS crystal, the end faces of the LGS crystal perpendicular to propagation direction are polished and coated with anti-reflection film at the wavelength 1.064µm. The transmission of coated LGS crystal at 1.064µm may be more than 99%.

As shown in Fig.2, the LGS crystal can be processed with the length *l*=8mm~1500mm at Z-axis direction which is the propagation direction of laser beam, thickness *d*=4mm~20mm at X- or Y-axis direction, width *w*=4mm~20mm which is perpendicular to the length and the thickness. For example, the size of a LGS crystal Q-switch is *l*=40.3mm at Z-axis direction, *d*=6.12mm at Y-axis direction, *w*=6.12mm at X-axis direction. Laser beam propagates along Z-axis. An electric field was applied parallel to Y-axis. The LGS Q-switch can work effectively with the half-wave voltage 2250V in a Nd:YAG laser with a pulse output energy of 350mJ at repetition rates of 1Hz or 10Hz.

## Claims

1. An electrooptic Q-switch device, which comprises an electrooptic single crystal (1) a reflection element (2) reflection element being arranged on one side of the electrooptic single crystal along a direction defined by the optical axis of the electrooptic single crystal, the electrooptic Q-switch device being arranged to receive a linearly polarized light beam at a side of the electrooptic single crystal opposite to the one where said reflection element is disposed, the light beam propagation direction being parallel to the optical axis of the electrooptic single crystal, **characterized in that** said electrooptic single crystal is a rectangularly shaped langasite-type (LGS) optically active single crystal, and **in that** the device is arranged such that an incident light beam (3) propogating through the langasite type single crystal along the optical axis is reflected by said reflection element and passes through said langasite-type single crystal along the optical axis again in order to eliminate the rotation of the polarization of the light beam originated from the optical activity of said langasite-type single crystal.

2. The electrooptic Q-switch device of claim 1 in which a λ/4 wave-plate (4) is installed between the langasite-type single crystal and the reflection element, λ being the wavelength of the light beam propagating in the langasite-type single crystal.

3. The electrooptic Q-switch device of claim 1 or 2 in which the langasite-type single crystal is a La₃Ca₅SiO₁₄ crystal, or a Nd doped La₃Ga₅SiO₁₄ crystal, or a La₃Ga₅₋ₓAlₓSiO₁₄ crystal (x ranges from 0 to 5), or a Sr₃Ga₂Ge₄O₁₄ crystal, or a Na₂CaGe₆O₁₄ crystal, or a Ca₃Ga₂Ge₄O₁₄ crystal, or a La₃Ga_{5.5}Nb_{0.5}O₁₄ crystal, or a La₃Ga_{5.5}Ta_{0.5}O₁₄ crystal.

4. The electrooptic Q-switch device of one of the preceding claims in which said langasite-type single crystal possesses two end faces along the main optical axis which are polished and coated with anti-reflection films for a wavelength of 1.064 µm.

5. The electrooptic Q-switch device of one of the preceding claims in which the length of the langasite-type single crystal along the light propagation or z direction ranges from 8 to 1500mm, and in which the thickness of the langasite-type single crystal in x or y directions orthogonal to said a direction ranges from 4 to 20 mm respectively.

6. The electrooptic Q-switch device of claim 1 in which the reflection element is a plane mirror with fall reflection at a wavelength of the light beam passing through said electrooptic langasite single crystal.

## Patentansprüche

1. Elektrooptische Q-Schaltervorrichtung, die einen elektrooptischen einzigen Kristall (1) und ein Reflexionselement (2) umfasst, wobei das Reflexionselement an einer Seite des elektrooptischen einzigen Kristalls entlang einer Richtung angeordnet ist, die durch eine optische Achse des elektrooptischen einzigen Kristalls definiert ist, wobei die elektrooptische Q-Schaltervorrichtung so angeordnet ist, dass sie einen linear polarisierten Lichtstrahl auf einer Seite des elektrooptischen einzigen Kristalls empfängt, die sich gegenüber derjenigen befindet, an der das Reflexionselement angeordnet ist, wobei die Ausbreitungsrichtung des Lichtstrahls parallel zur optischen Achse des elektrooptischen einzigen Kristalls verläuft, **dadurch gekennzeichnet, dass** der elektrooptische einzige Kristall ein rechteckig geformter optisch aktiver einziger Kristall vom Langasit-Typ (LGS) ist und dass die Vorrichtung derart angeordnet ist, dass ein einfallender Lichtstrahl (3), der sich durch den einzigen Kristall vom Langasit-Typ entlang der optischen Achse ausbreitet, von dem Reflexionselement reflektiert wird und sich erneut durch den einzigen Kristall vom Langasit-Typ entlang der optischen Achse ausbreitet, um die Rotation der Polarisierung des Lichtstrahls, die sich aus der optischen Aktivität des einzigen Kristalls vom Langasit-Typ ergibt, zu eliminieren.

2. Elektrooptische Q-Schaltervorrichtung nach Anspruch 1, wobei eine Viertel-Lambda-Platte (4) zwischen dem einzigen Kristall vom Langasit-Typ und dem Reflexionselement installiert ist, wobei λ die Wellenlänge des Lichtstrahls ist, der sich durch den einzigen Kristall vom Langasit-Typ ausbreitet.

3. Elektrooptische Q-Schaltervorrichtung nach Anspruch 1 oder 2, wobei der einzige Kristall vom Langasit-Typ ein La₃Ga₅SiO₁₄-Kristall oder ein mit Nd dotierter La₃Ga₅SiO₁₄-Kristall oder ein La₃Ga₅₋ₓAlₓSiO₁₄-Kristall (x im Bereich von 0 bis 5) oder ein Sr₃Ga₂Ge₄O₁₄-Kristall oder ein Na₂CaGe₆O₁₄-Kristall oder ein Ca₃Ga₂Ge₄O₁₄-Kristall oder ein La₃Ga_{5,5}Nb_{0,5}O₁₄-Kristall oder ein La₃Ga_{5,5}Ta_{0,5}O₁₄-Kristall ist.

4. Elektrooptische Q-Schaltervorrichtung nach einem der vorstehenden Ansprüche, wobei der einzige Kristall vom Langasit-Typ zwei Endflächen entlang der optischen Hauptachse aufweist, die poliert und mit Anti-Reflexion-Filmen für eine Wellenlänge von 1,064 µm beschichtet sind.

5. Elektrooptische Q-Schaltervorrichtung nach einem der vorstehenden Ansprüche, wobei die Länge des einzigen Kristalls vom Langasit-Typ entlang der Lichtausbreitungs- oder z-Richtung im Bereich von 8 bis 1500 mm ist und die Dicke des einzigen Kristalls vom Langasit-Typ in x- oder y-Richtung orthogonal zur der z-Richtung im Bereich von jeweils 4 bis 20 mm ist.

6. Elektrooptische Q-Schaltervorrichtung nach Anspruch 1, in der das Reflexionselement ein Planspiegel mit vollständiger Reflexion bei einer Wellenlänge des Lichtstrahls ist, der sich durch den einzigen Kristall vom Langasit-Typ ausbreitet.

## Revendications

1. Dispositif de déclenchement électro-optique qui comprend un monocristal électro-optique (1) et un élément de réflexion (2), l'élément de réflexion étant placé d'un côté du monocristal électro-optique le long d'une direction définie par l'axe optique du monocristal électro-optique, le dispositif de déclenchement électro-optique étant agencé de manière à recevoir un faisceau lumineux polarisé linéairement d'un côté du monocristal électro-optique opposé à celui où est disposé ledit élément de réflexion, la direction de propagation du faisceau lumineux étant parallèle à l'axe optique du monocristal électro-optique, **caractérisé en ce que** ledit monocristal électro-optique est un monocristal optiquement actif du type langasite (LGS) de forme rectangulaire, et **en ce que** le dispositif est agencé de telle manière qu'un faisceau lumineux incident (3) qui se propage dans le monocristal du type langasite, le long de l'axe optique, est réfléchi par ledit élément de réflexion et repasse dans ledit monocristal du type langasite le long de l'axe optique afin d'éliminer la rotation de la polarisation du faisceau lumineux qui provient de l'activité optique dudit monocristal du type langasite.

2. Dispositif de déclenchement électro-optique selon la revendication 1, dans lequel une lame quart d'onde (λ/4) (4) est installée entre le monocristal du type langasite et l'élément de réflexion, λ étant la longueur d'onde du faisceau lumineux qui se propage dans le monocristal du type langasite.

3. Dispositif de déclenchement électro-optique selon la revendication 1 ou 2, dans lequel le monocristal du type langasite est un cristal de La₃Ga₅SiO₁₄, ou un cristal de La₃Ga₅SiO₁₄ dopé au Nd, ou un cristal de La₃Ga₅₋ₓAlₓSiO₁₄ (x allant de 0 à 5), ou un cristal de Sr₃Ga₂Ge₄O₁₄, ou un cristal de Na₂CaGe₆O₁₄, ou, un cristal de Ca₃Ga₂Ge₄O₁₄, ou un cristal de La₃Ga_{5,5}Nb_{0,5}O₁₄, ou un cristal de La₃Ga_{5,5}Ta_{0,5}O₁₄.

4. Dispositif de déclenchement électro-optique selon l'une des revendications précédentes, dans lequel ledit monocristal du type langasite possède deux faces d'extrémité le long de l'axe optique principal qui sont polies et revêtues de films anti-réflexion pour une longueur d'onde de 1,064 µm.

5. Dispositif de déclenchement électro-optique selon l'une des revendications précédentes, dans lequel la longueur du monocristal du type langasite le long de la direction de propagation de la lumière ou de la direction z vaut de 8 à 1 500 mm, et dans lequel l'épaisseur du monocristal du type langasite dans les directions x ou y, orthogonales à ladite direction z, vaut respectivement de 4 à 20 mm.

6. Dispositif de déclenchement électro-optique selon la revendication 1, dans lequel l'élément de réflexion est un miroir plat ayant une réflexion totale à la longueur d'onde du faisceau lumineux qui traverse ledit monocristal électro-optique du type langasite.
